# EUROPEAN PATENT APPLICATION

(11) **EP 4 340 052 A1**
(43) Date of publication of application: **20.03.2024**
(21) Application number: 23184114.9
(22) Date of filing: 07.07.2023
(51) Int. Cl.: H01M 4/04, H01M 4/139, H01M 4/1397, H01M 4/36, H01M 4/48, H01M 4/58, H01M 4/62

(54) **METHOD OF MANUFACTURING A POSITIVE ELECTRODE MATERIAL AND BATTERY PRODUCED THEREFROM**

(30) Priority: 29.08.2022 TW 111132583
(71) Applicant: Advanced Lithium Electrochemistry Co., Ltd., Taoyuan City 33068 (TW)
(72) Inventor: WEI, CHAO-NAN, 33068 Taoyuan City (TW); TSAI, FENG-YEN, 33068 Taoyuan City (TW); WANG, YA-HUI, 33068 Taoyuan City (TW); CHEN, HAN-YU, 33068 Taoyuan City (TW)
(74) Representative: Cabinet Chaillot

(57) **Abstract**

A method of manufacturing a positive electrode material has the steps of synthesizing an iron metal in a phosphoric acid solution to form an iron phosphate dispersion solution; adding a vanadium pentoxide (V₂O₅), a non-ionic surfactant and a carbon source to the iron phosphate dispersion solution; and adding a lithium salt to the iron phosphate dispersion solution and then grinding and dispersing it to produce a positive electrode material. By regulating the timing of the addition of vanadium pentoxide (V₂O₅), the present invention enables the battery made of the positive electrode material to have the advantage of higher battery performance.

## Description

### FIELD OF THE INVENTION

A method of manufacturing a positive electrode material, in particular a method of manufacturing positive electrode material suitable for secondary batteries and increasing their capacity.

### BACKGROUND OF THE INVENTION

Since the outbreak of the COVID pandemic in 2020, home working and studying has become a normal lifestyle for people, and electronic products have played an important role in bridging the communication between people and the outside world under the personal restriction caused by the pandemic. The battery is the core component of electronic products, especially portable power supply as the main or preferred power source of electronic products, commonly seen in the secondary battery, the lithium battery is widely used, and among the existing secondary battery types, due to the advantages of lithium-ion secondary battery has a high volumetric capacity, no pollution, good cycle charge, and discharge characteristics, no memory effect, etc., which has more potential for development.

To evaluate the performance of lithium batteries in secondary batteries, one of the indicators is the electrical capacity, and the factor of feedback electrical capacity performance lies in the selection and improvement of positive electrode material. The positive electrode material that is widely known and commercially used is lithium iron phosphate compound material with spinel structure or olivine structure, which is one of the main choices of positive electrode material in the market nowadays because of its good electrochemical characteristics, safety, sufficient raw materials, high specific capacity, good cycling performance and thermal stability, and high charging and discharging efficiency.

However, due to the limitation of material properties, the overall lithium-ion dispersion and electronic conductivity of lithium iron phosphate compounds are easily affected to a large extent during high-rate charging and discharging, and consequently, the conductive capacity decreases. However, the methods that can be used to improve the electronic conductivity of lithium iron phosphate currently include reducing the particle size of the material or doping it with conductive materials, but these methods are not only complicated and difficult to control, but also costly to produce, and may cause environmental problems due to the emission of organic matter from the cracking process during mass production, and therefore are not practical.

Given this, it is crucial to provide a manufacturing method that can increase the electrical capacity of the positive electrode material and improve the existing technical dilemma.

### SUMMARY OF THE INVENTION

In order to solve the problem that the present methods for improving the electronic conductivity of lithium iron phosphate are complicated, costly, and may cause environmental pollution, the present invention provides a method for manufacturing positive electrode material comprising the steps of synthesizing an iron metal in a phosphoric acid solution to form an iron phosphate dispersion solution; adding a vanadium pentoxide (V₂O₅) and a carbon source to the iron phosphate dispersion solution; and adding a lithium salt to the iron phosphate dispersion solution, and then grinding and dispersing to produce a positive electrode material.

Wherein the carbon source comprises a monosaccharide, a disaccharide, or a polysaccharide.

Wherein the carbon source comprises a fructose.

With the above description, the present invention provides the following beneficial effects and advantages:
1. The present invention utilizes the regulation of the timing of the addition of the vanadium pentoxide (V₂O₅) to produce a vanadium pentoxide (V₂O₅) having an oxygen vacancy, which promotes the diffusion dynamics of the ions and enables the positive electrode material to achieve a better electrical effect.
2. Furthermore, when the positive electrode material made by the present invention is applied to a battery, the battery has a better lithium-ion dispersion ability to reduce the polarization phenomenon of the battery, which helps to improve the battery performance, thereby achieving the purpose of extending the life of the positive electrode material.

### BRIEF DESCRIPTION OF THE DRAWINGS

The present invention will be further illustrated by way of exemplary embodiments, which will be described in detail by way of the accompanying drawings. These embodiments are not limiting, and in these embodiments, the same numbering indicates the same structure, wherein:
FIG. 1 is a schematic flow diagram of the first manufacturing method of the present invention;
FIG. 2 is a test diagram of the 0.1C charge curve of the present invention;
FIG. 3 is a test diagram of the 0.1C discharge curve of the present invention;
FIG. 4 is a test diagram of the 1C charge curve of the present invention;
FIG. 5 is a test diagram of the 5C discharge curve of the present invention; and
FIG. 6 is a test diagram of the cyclic voltammetry curve of the present invention.

### DESCRIPTION OF THE PREFERRED EMBODIMENTS

In order to more clearly illustrate the technical solution of the embodiment of the present invention, the description of the embodiments and the accompanying drawings necessary for their use are described and introduced below. It will be understood that the drawings cited in the following description are only examples or embodiments of the present invention that can be specifically and clearly expressed and that all variations or reasonable modifications of the present invention that can be applied to other similar situations by a person having ordinary skill in the field of the present invention on the basis of these drawings should be covered by the scope of the present invention. Unless otherwise indicated or obvious from the context, the same numbering in the drawings represents the same structure or operation.

As indicated in the present invention and claims, unless the context clearly suggests otherwise, the terms "a" and/or "the" do not refer to the singular, but may also include the plural. In general, the terms "include" and " comprise" suggest only the inclusion of clearly identified steps and elements that do not constitute an exclusive list, and the method or device may also contain other steps or elements.

Flowcharts are used in the present invention to illustrate the steps performed according to the method embodiments of the present invention and the means of operation therein. It should be understood that the steps included in the method are not necessarily performed in a precise sequence. On the contrary, the steps may be performed in reverse order or simultaneously. Also, other steps may be added to these processes or one or more steps may be removed from these processes.

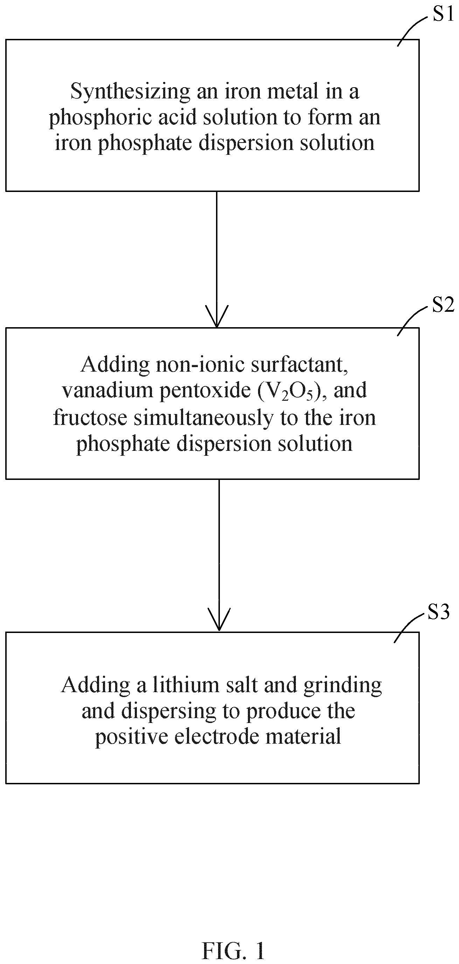

The method of manufacturing the positive electrode material of the present invention will be described in detail as shown in FIG. 1, the steps of which include:
Step S1) Synthesizing an iron metal in a phosphoric acid solution to form an iron phosphate dispersion solution;
Step S2) Adding a dispersant, a vanadium pentoxide (V₂O₅), and a carbon source simultaneously to the iron phosphate dispersion solution; and
Step S3) Adding a lithium salt and grinding and dispersing to produce the positive electrode material.

Wherein, the carbon source comprises a monosaccharide, a disaccharide, or a polysaccharide, such as fructose. The added carbon source may be encapsulated outside of the positive electrode material.

Wherein, the highlight of the present invention is the timing of the addition of the vanadium pentoxide (V₂O₅) before the addition of the lithium salt, after the addition of the vanadium pentoxide (V₂O₅), then the grinding process can produce the vanadium pentoxide (V₂O₅) with oxygen vacancies, which can promote the diffusion dynamics of ions, so that the positive electrode material can achieve a better electrical effect. The positive electrode material produced by the present invention is LiFePO₄ containing metal oxides, which can also be called "nano-metal oxide eutectic lithium iron phosphate compound (LFP-NCO)".

### <Embodiment>

Mix 3760g of phosphoric acid with 9000ml of deionized water to form an acidic solution, add 2466g of iron powder (purity ≧ 99%) and allow to react for 3 hours, then add 1427g of phosphoric acid and 1000ml of deionized water and allow to react at room temperature to form a mixed slurry containing iron and phosphorus products.

Next, the mixed slurry is placed in a ball mill for 5 minutes to allow for uniform dispersion of the mixed slurry. Meanwhile, 5.4g of dispersant, 31.5g of vanadium pentoxide (V₂O₅), and 495g of fructose are added and ground for 5 minutes to form a first precursor.

Place the first precursor in the ball mill for grinding and gradually add 1525g of lithium hydroxide (LiOH) and 303.8g of lithium carbonate (Li₂CO₃) for grinding and dispersing during grinding for 15 minutes to form a second precursor. The second precursor has a D₇₀ size of 1 to 1.6 microns (um).

Place the second precursor in high-temperature sintering and crushing to produce an embodiment of positive electrode material powder (LiFePO₄/V₂O₅/C) containing lithium iron phosphate, vanadium oxide, and carbon.

### <Comparative Example>

Mix 3760g of phosphoric acid with 9000ml of deionized water to form an acidic solution, add 2466g of iron powder (purity ≧ 99%) and allow to react for 3 hours, then further add 1427g of phosphoric acid and 1000ml of deionized water, and allow to react at room temperature to form a mixed slurry containing iron and phosphorus products.

Next, the mixed slurry is placed in a ball mill for 5 minutes to allow for uniform dispersion of the mixed slurry. Meanwhile, 5.4g of dispersant and 495g of fructose are added and ground for 5 minutes to form a first comparative precursor.

Place the first comparative precursor in the ball mill for grinding and gradually add 1525g of lithium hydroxide (LiOH) and 303.8g of lithium carbonate (Li₂CO₃) for grinding and dispersing during grinding for 15 minutes to form a second comparative precursor. The second comparative precursor has a D₇₀ size of 1 to 1.6 microns (um).

Next, add 3.5g of vanadium pentoxide (V₂O₅) and place it in the ball mill to grind and disperse it to the D₇₀ size ranging from 1 to 1.6 microns (um), and then sinter and crush it at high temperature to produce a comparative positive electrode material powder (LiFePO₄/V₂O₅/C) containing lithium iron phosphate, vanadium oxide, and carbon.

### <Electrical Properties Results>

Compare the effectiveness of the V₂O₅ between the Embodiment and the Comparative Example after it has been added at different points in time.

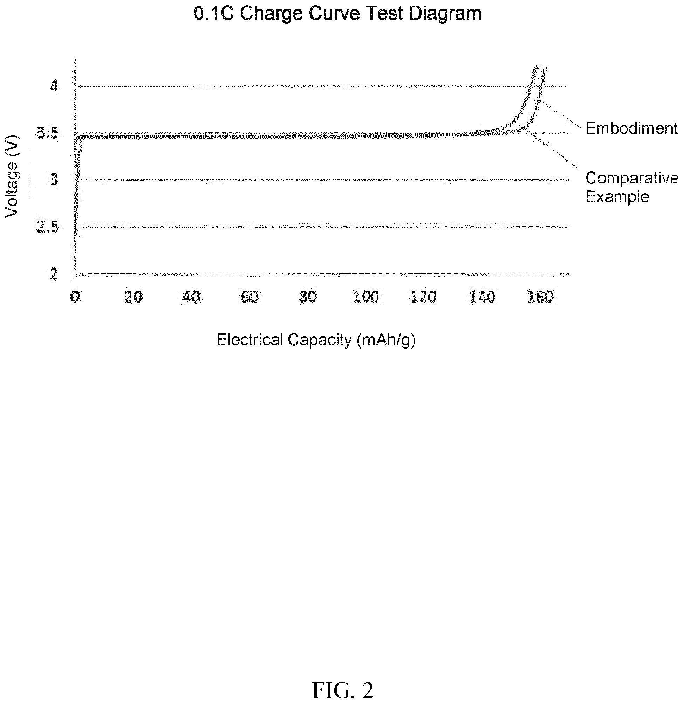

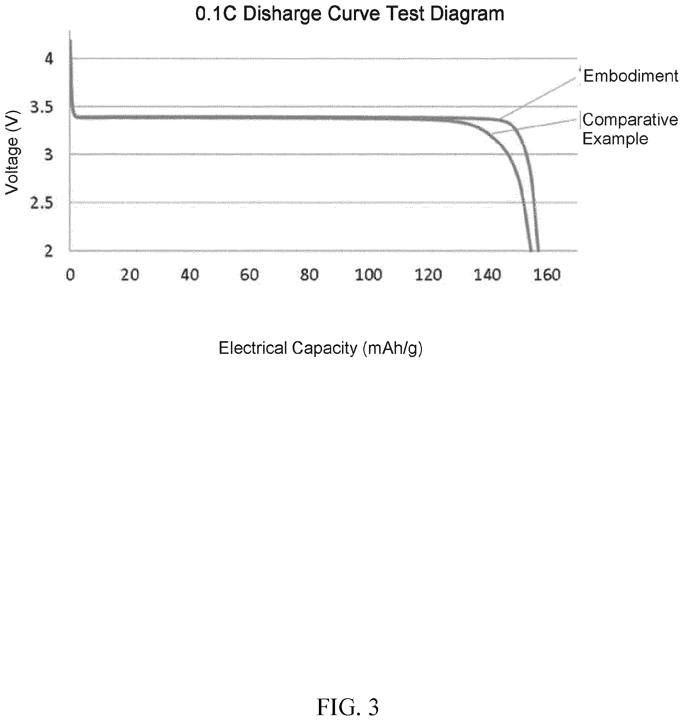

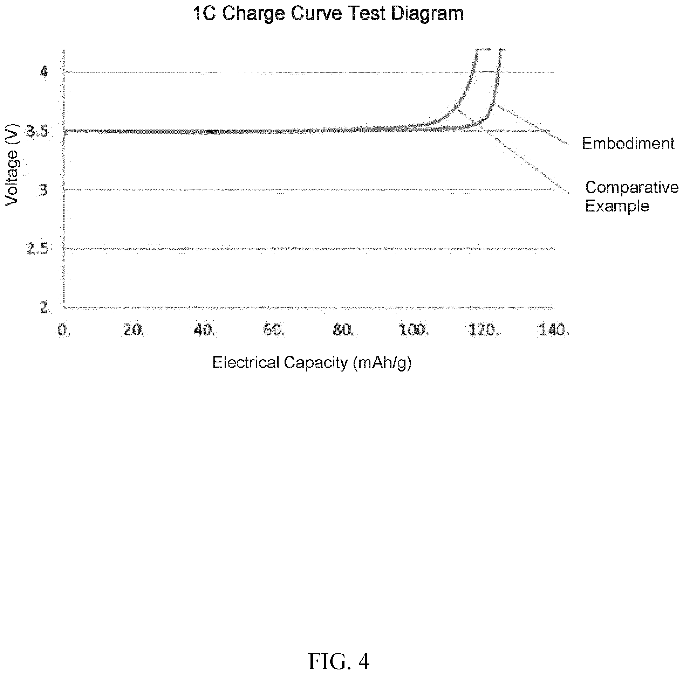

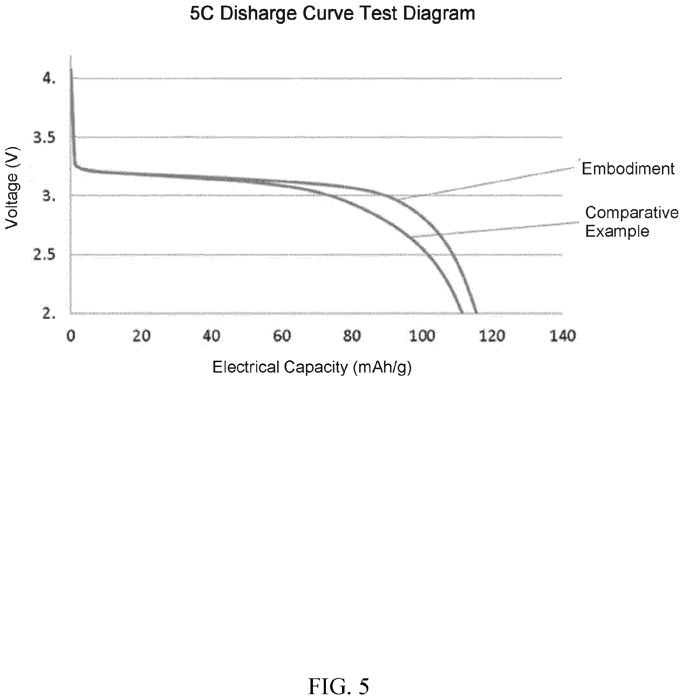

Referring to Table 1 and Table 2 below and FIGS. 2 to 5, the present invention manufactures a battery for the Embodiment and the Comparative Example respectively, conducts a charge and discharge curve test, and calculates the 0.1C charge capacity, 0.1C discharge capacity, first Cullen efficiency, 1C charge capacity, 5C discharge capacity and constant current ratio for each battery.

Wherein, the 0.1C charge capacity and the 0.1C discharge capacity are used to explore the performance of the first charge and discharge of each battery, which can be further converted into the first Cullen efficiency (the ratio of discharge capacity to charge capacity in the same cycle) and constant current ratio (the ratio of constant current charge capacity to total battery charge capacity), which can be used to explore the charge and discharge efficiency of each battery.

The 1C charge capacity and 5C discharge capacity are used to explore the polarization phenomenon during the discharge process of each battery at a high rate. In Table 2, the specific surface area, carbon content, surface density, and compaction density are used to confirm the physical properties of each battery, to confirm that the physical conditions of each battery are similar, and to prove that the electrical properties of each battery are not greatly affected by its physical properties, and to serve as a reference for the current stability. The results in Table 1, Table 2, and FIGS. 2 to 5 show that there is no significant difference between the 0.1C charge capacity, the 0.1C discharge capacity, the first Cullen efficiency, the 1C charge capacity, and the 5C discharge capacity of the two batteries made by the Embodiment and the Comparative Example.

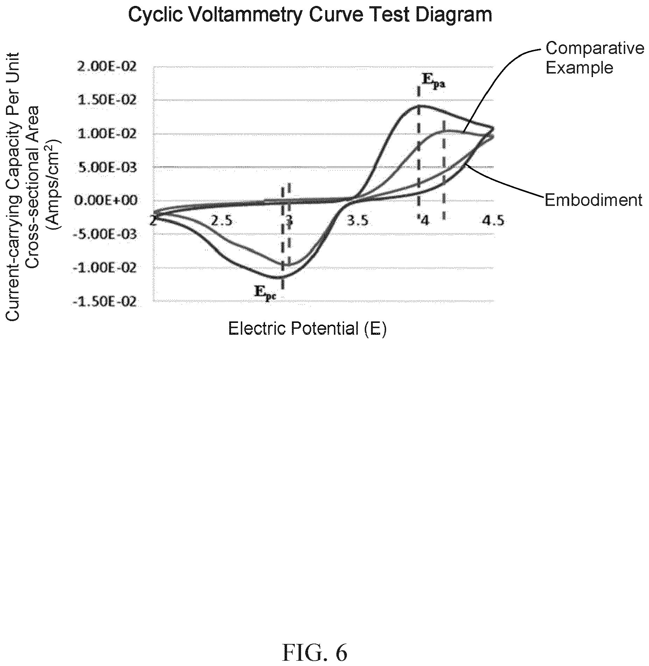

The present invention further conducts cyclic voltammetry tests on the Embodiment and the Comparative Example to examine the dispersion capability of a lithium-ion in each of these batteries. Using 3.5mV/s (5C charge/discharge rate) and a voltage range of 2 to 4.5V as test conditions, the charge and discharge curve tests are performed. The results in Table 3 and FIG. 6 show that although the sequence of V₂O₅ addition did not change the material properties and electrical properties much, however, the results of the cyclic voltammetry tests showed that the peak oxidation-reduction (oxidation peak potential, Eₚₐ; reduction peak potential, E_{pc}) of the battery made by the Embodiment, as well as the results of an oxidation-reduction potential difference (ΔE) and a lithium-ion dispersion coefficient (D_{Li+}) of the battery produced in the Comparative Example are significantly different. Wherein, the oxidation-reduction potential difference (ΔE) can prove the overall polarization phenomenon of the battery, and the smaller the polarization phenomenon in the battery, the better the lithium-ion dispersion ability (compared to the lithium-ion dispersion coefficient result), which helps to improve the battery performance.

From the above, it can be seen that the addition of V₂O₅ to the battery produced by the Embodiment before the lithium salt is added can help suppress the polarization phenomenon of the material in the multiplier discharge. It is assumed that this phenomenon is caused by the fact that when the first precursor is formed in Step (S2) and the second precursor is formed in Step (S3), the V₂O₅ added in the Embodiment is ground more often and for a longer time in the whole process (compared to the Comparative Example), which results in the oxygen vacancy characteristic of the V₂O₅ and improves the embedding ability of lithium ions.

**<Table 1>**

| | 0.1C Charge Capacity (mAh/g) | 0.1C Discharge Capacity (mAh/g) | 1C Charge Capacity (mAh/g) | 5C Discharge Capacity (mAh/g) | First Cullen Efficiency (%) | Constant Current Ratio (%) | 5C Discharge to 50% of voltage (V) |
|---|---|---|---|---|---|---|---|
| Embodiment | 161 | 157 | 125 | 115 | 97.5 | 99.81 | 3.131 |
| Comparative Example | 159 | 154 | 121 | 111 | 96.8 | 99.64 | 3.107 |

**<Table 2>**

| | Specific Surface Area (m2/g) | Carbon Content (%) | Surface Density (mg/cm²) | Compaction Density (g/cm³) |
|---|---|---|---|---|
| Embodiment | 13.15 | 1.40 | 10.4 | 2.3 |
| Comparative Example | 13.86 | 1.54 | 10.7 | 2.3 |

**<Table 3>**

| | Oxidation Peak Potential (Eₚₐ) | Reduction Peak Potential (E_{pc}) | Oxidation Reduction Potential Difference (ΔE) | Lithium-ion Dispersion Coefficient (D_{Li+}) |
|---|---|---|---|---|
| Embodiment | 3.971 | 2.909 | 1.062 | 1.01 × 10⁻¹³ |
| Comparative Example | 4.176 | 2.985 | 1.191 | 8.28 × 10⁻¹⁴ |

Finally, it should be understood that the embodiments described in the present invention are intended only to illustrate the principles of the embodiments of the present invention. Other variations may also fall within the scope of the present invention. Therefore, as an illustration, and not as a limitation, alternative embodiments and method steps of the present invention that can produce the same effect may be considered consistent with the disclosure of the present invention. Accordingly, embodiments of the present invention are not limited to the embodiments expressly introduced and described in the present invention.

## Claims

1. A method of manufacturing a positive electrode material, the steps of which include:
synthesizing an iron metal in a phosphoric acid solution to form an iron phosphate dispersion solution;
adding a vanadium pentoxide (V₂O₅), and a non-ionic surfactant, and a carbon source to the iron phosphate dispersion solution; and
adding a lithium salt to the iron phosphate dispersion solution, and then grinding and dispersing to produce a positive electrode material.

2. The method of manufacturing a positive electrode material according to claim 1, wherein the carbon source comprises a monosaccharide.

3. The method of manufacturing a positive electrode material according to claim 1, wherein the carbon source comprises a disaccharide.

4. The method of manufacturing a positive electrode material according to claim 1, wherein the carbon source comprises a polysaccharide.

5. The method of manufacturing a positive electrode material according to claim 1, wherein the carbon source comprises a fructose.

6. A battery comprising a positive electrode material, which is produced by the method according to any one of Claims 1 to 5.
